# EUROPEAN PATENT APPLICATION

(11) **EP 4 660 535 A1**
(43) Date of publication of application: **10.12.2025**
(21) Application number: 25181600.5
(22) Date of filing: 09.06.2025
(51) Int. Cl.: F23R 3/28, F23R 3/36

(54) **GASEOUS FUEL NOZZLE FOR TURBINE ENGINE POWERPLANT**

(30) Priority: 07.06.2024 US 202463657501 P
(71) Applicant: PRATT & WHITNEY CANADA CORP., Longueuil, Québec J4G 1A1 (CA)
(72) Inventor: KANNAN, Jayaprakash, (01BE5) Longueuil, J4G 1A1 (CA); WONG, Owen, (01BE5) Longueuil, J4G 1A1 (CA); SNOUSSI, Oumayma, (01BE5) Longueuil, J4G 1A1 (CA); LA FLECHE, Maxime, (01BE5) Longueuil, J4G 1A1 (CA); LEUNG, Tim, (01BE5) Longueuil, J4G 1A1 (CA); LAKSHMANAN, Varun, (01BE5) Longueuil, J4G 1A1 (CA); AHMED, Mohammad Mortada, (01BE5) Longueuil, J4G 1A1 (CA)
(74) Representative: Dehns

(57) **Abstract**

An apparatus for a powerplant (20) includes a fuel nozzle (84) extending longitudinally along a nozzle centerline (88) to a distal end (90). The fuel nozzle (84) includes a first gaseous fuel circuit (96) and a second gaseous fuel circuit (94, 95). The first gaseous fuel circuit (96) includes a first circuit fuel passage (152), a first circuit fuel outlet (156) and a fuel swirler (154). The first circuit fuel passage (152) extends longitudinally within the fuel nozzle (84) along the nozzle centerline (88), in a direction towards the distal end (90), to the first circuit fuel outlet (156). The fuel swirler (154) is disposed within the first circuit fuel passage (152) upstream of the first circuit fuel outlet (156). The second gaseous fuel circuit (94, 95) includes a second circuit fuel annulus (120, 138) and a second circuit fuel outlet (124, 142). The second circuit fuel annulus (120, 138) extends longitudinally within the fuel nozzle (84) along the nozzle centerline (88), in the direction towards the distal end (90), to the second circuit fuel outlet (124, 142).

## Description

### TECHNICAL FIELD

This invention relates generally to a turbine engine and, more particularly, to a fuel nozzle for the turbine engine.

### BACKGROUND INFORMATION

A gas turbine engine includes one or more fuel nozzles for injecting fuel into a combustor for combustion. Various types of fuel nozzles are known in the art. While these known fuel nozzles have various benefits, there is still room in the art for improvement.

### SUMMARY

According to an aspect of the present invention, an apparatus is provided for a powerplant. This apparatus includes a fuel nozzle extending longitudinally along a nozzle centerline to a distal end. The fuel nozzle includes a first gaseous fuel circuit and a second gaseous fuel circuit. The first gaseous fuel circuit includes a first circuit fuel passage, a first circuit fuel outlet and a fuel swirler. The first circuit fuel passage extends longitudinally within the fuel nozzle along the nozzle centerline, in a direction towards the distal end of the fuel nozzle, to the first circuit fuel outlet. The fuel swirler is disposed within the first circuit fuel passage upstream of the first circuit fuel outlet. The second gaseous fuel circuit includes a second circuit fuel annulus and a second circuit fuel outlet. The second circuit fuel annulus extends longitudinally within the fuel nozzle along the nozzle centerline, in the direction towards the distal end of the fuel nozzle, to the second circuit fuel outlet.

According to another aspect of the present invention, another apparatus is provided for a powerplant. This apparatus includes a fuel nozzle and a fuel delivery system. The fuel nozzle extends longitudinally along a nozzle centerline to a distal end. The fuel nozzle includes a first fuel circuit, a second fuel circuit and a third fuel circuit. The first fuel circuit includes a first circuit fuel passage and a first circuit fuel outlet. The first circuit fuel passage extends within the fuel nozzle, in a longitudinal direction towards the distal end of the fuel nozzle, to the first circuit fuel outlet. The second fuel circuit is radially outboard of the first fuel circuit. The second fuel circuit includes a second circuit fuel annulus and a second circuit fuel outlet. The second circuit fuel annulus extends within the fuel nozzle, in the longitudinal direction and a radial inward direction towards the nozzle centerline, to the second circuit fuel outlet. The third fuel circuit is radially outboard of the second fuel circuit. The third fuel circuit includes a third circuit fuel annulus and a third circuit fuel outlet. The third circuit fuel annulus extends within the fuel nozzle, in the longitudinal direction and the radial inward direction, to the third circuit fuel outlet. The fuel delivery system includes a gaseous fuel source. The fuel delivery system is configured to deliver gaseous fuel to at least one of the first fuel circuit, the second fuel circuit or the third fuel circuit.

According to still another aspect of the present invention, another apparatus is provided for a powerplant. This apparatus includes a fuel nozzle and a fuel delivery system. The fuel nozzle extends longitudinally along a nozzle centerline to a distal end. The fuel nozzle includes a first fuel circuit, a second fuel circuit and a third fuel circuit. The first fuel circuit includes a first circuit fuel passage and a first circuit fuel outlet. The first circuit fuel passage extends within the fuel nozzle, in a longitudinal direction towards the distal end of the fuel nozzle, to the first circuit fuel outlet. The second fuel circuit is radially outboard of the first fuel circuit. The second fuel circuit includes a plurality of second fuel circuit passages and a plurality of second fuel circuit outlets arranged circumferentially around the nozzle centerline. Each of the second fuel circuit passages extends within the fuel nozzle, in the longitudinal direction, to a respective one of the s second fuel circuit outlets. The third fuel circuit is radially outboard of the second fuel circuit. The third fuel circuit includes a third circuit fuel annulus and a third circuit fuel outlet. The third circuit fuel annulus extends within the fuel nozzle, in the longitudinal direction and a radial inward direction, to the third circuit fuel outlet. The fuel delivery system includes a gaseous fuel source. The fuel delivery system is configured to deliver gaseous fuel to at least one of the first fuel circuit, the second fuel circuit or the third fuel circuit.

The following optional features may be applied to any of the above aspects.

The fuel nozzle may also include a fuel swirler within the first circuit fuel passage.

The fuel nozzle may also include a wall, a first air circuit and a second air circuit. The first air circuit may include a first circuit air annulus and a first circuit air outlet. The first circuit air annulus may be radially outboard of the first fuel circuit and radially inboard of the second fuel circuit. The first circuit air annulus may extend within the fuel nozzle, in the longitudinal direction and the radial inward direction, to the first circuit air outlet. The second air circuit may include a plurality of second circuit air passages and a plurality of second circuit air outlets. The second circuit air passages may be radially outboard of the third fuel circuit. Each of the second circuit air passages may extend through the wall of the fuel nozzle, in the longitudinal direction and the radial inward direction, to a respective one of the second circuit air outlets.

The fuel swirler may include a center body and one or more helical vanes arranged circumferentially around and projecting radially out from the center body.

The first circuit fuel outlet may have a non-annular geometry.

The first circuit fuel passage may extend radially out to an outer side. The first circuit fuel passage may include a first section and a second section longitudinally between the first section and the first circuit fuel outlet along the nozzle centerline. A radius to the outer side of the first circuit fuel passage may be uniform longitudinally along the first section. The radius to the outer side of the first circuit fuel passage may decrease longitudinally along the second section.

The first circuit fuel passage may also include a third section longitudinally between the second section and the first circuit fuel outlet along the nozzle centerline. The radius to the outer side of the first circuit fuel passage may be uniform longitudinally along the third section.

The fuel swirler may be disposed within the first section and upstream of the second section.

The second circuit fuel outlet may be located radially outboard of the first circuit fuel outlet. The second circuit fuel outlet may be located longitudinally between the first circuit fuel outlet and the distal end of the fuel nozzle.

The second circuit fuel annulus may taper radially inward towards the nozzle centerline as the second circuit fuel annulus extends longitudinally along the nozzle centerline to the second circuit fuel outlet.

The second gaseous fuel circuit may also include a plurality of second circuit fuel passages arranged circumferentially about the nozzle centerline. Each of the second circuit fuel passages may extend longitudinally within the fuel nozzle to an upstream end of the second circuit fuel annulus.

The second gaseous fuel circuit may also include a second circuit fuel gallery. Each of the second circuit fuel passages may extend longitudinally within the fuel nozzle from the second circuit fuel gallery to the upstream end of the second circuit fuel annulus.

The fuel nozzle may also include a third gaseous fuel circuit. The third gaseous fuel circuit may include a third circuit fuel annulus and a third circuit fuel outlet. The third circuit fuel annulus may extend longitudinally within the fuel nozzle along the nozzle centerline, in the direction towards the distal end of the fuel nozzle, to the third circuit fuel outlet.

The third circuit fuel outlet may be located radially between the first circuit fuel outlet and the second circuit fuel outlet. The third circuit fuel outlet may be located longitudinally between the first circuit fuel outlet and the second circuit fuel outlet along the nozzle centerline.

The fuel nozzle may also include a third gaseous fuel circuit. The third gaseous fuel circuit may include a plurality of third circuit fuel passages and a plurality of third circuit fuel outlets. The third circuit fuel passages may be arranged circumferentially about the nozzle centerline. Each of the third circuit fuel passages may extend longitudinally within the fuel nozzle along the nozzle centerline, in the direction towards the distal end of the fuel nozzle, to a respective one of the third circuit fuel outlets.

The third circuit fuel outlets may be arranged along an inner periphery of the second circuit fuel outlet.

The fuel nozzle may also include an air circuit. The air circuit may include a circuit air annulus and a circuit air outlet. The circuit air annulus may extend longitudinally within the fuel nozzle along the nozzle centerline, in the direction towards the distal end of the fuel nozzle, to the circuit air outlet. The circuit air outlet may be located radially between the first circuit fuel outlet and the second circuit fuel outlet.

The fuel nozzle may also include an air circuit and a wall. The air circuit may include a plurality of circuit air passages and a plurality of circuit air outlets. The circuit air passages may be arranged circumferentially about the nozzle centerline. Each of the circuit air passages may extend longitudinally through the wall of the fuel nozzle, in the direction towards the distal end of the fuel nozzle, to a respective one of the circuit air outlets. The circuit air outlets may be located radially outboard of the first circuit fuel outlet and the second circuit fuel outlet.

The apparatus may also include a fuel delivery system comprising a gaseous fuel source. The fuel delivery system may be configured to deliver gaseous fuel to the first gaseous fuel circuit and the second gaseous fuel circuit.

The gaseous fuel may be or otherwise include hydrogen gas.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft powerplant.
FIG. 2 is a schematic illustration of a combustor with a fuel delivery system.
FIG. 3 is a sectional illustration of a portion of a combustor section with the fuel delivery system.
FIG. 4 is a partial sectional illustration of a fuel nozzle.
FIG. 5 is a partial sectional illustration of another fuel nozzle.

### DETAILED DESCRIPTION

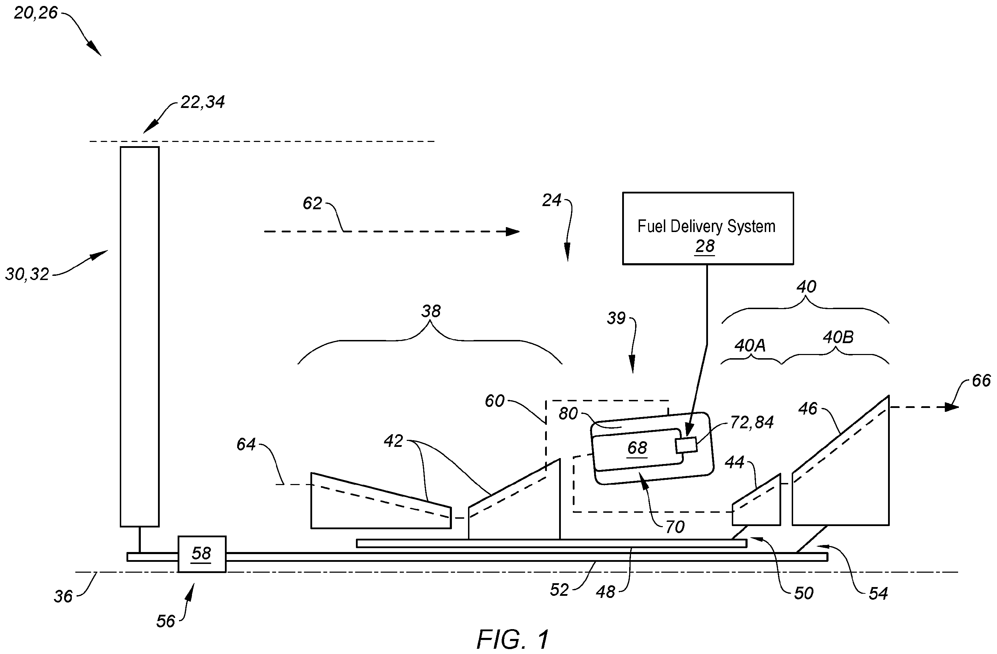

FIG. 1 illustrates a powerplant 20 for an aircraft. The aircraft may be an airplane, a helicopter, a drone (e.g., an unmanned aerial vehicle (UAV)) or any other manned or unmanned aerial vehicle or system. The powerplant 20 may be configured as, or otherwise included as part of, a propulsion system for the aircraft. The powerplant 20 may also or alternatively be configured as, or otherwise included as part of, an electrical power system for the aircraft. The present invention, however, is not limited to aircraft applications. The powerplant 20, for example, may alternatively be configured as, or otherwise included as part of, an electrical power system for ground-based operation (e.g., an industrial powerplant), for aquatic operation, or otherwise. However, for ease of description, the powerplant 20 is described below as an aircraft powerplant.

The aircraft powerplant 20 of FIG. 1 includes a mechanical load 22 and a core 24 of a gas turbine engine 26, where the engine core 24 is configured to power operation of the mechanical load 22. The aircraft powerplant 20 also includes a fuel delivery system 28 for the turbine engine 26 and its engine core 24.

The mechanical load 22 may be configured as or otherwise include a rotor 30 mechanically driven by the engine core 24. This driven rotor 30 may be a bladed propulsor rotor for the aircraft propulsion system. The propulsor rotor may be a ducted propulsor rotor or an open propulsor rotor; e.g., an un-ducted propulsor rotor. For example, where the turbine engine 26 is a turbofan engine, the ducted propulsor rotor may be a fan rotor 32. Where the turbine engine 26 is a turboprop engine, the open propulsor rotor may be a propeller rotor. Where the turbine engine 26 is a turboshaft engine, the open propulsor rotor may be a rotorcraft rotor such as a helicopter main rotor or a helicopter tail rotor. Alternatively, the driven rotor 30 may be configured as a generator rotor of an electric power generator for the aircraft electrical power system; e.g., an auxiliary power unit (APU) system. The present invention, however, is not limited to the foregoing exemplary mechanical loads nor to the foregoing exemplary turbine engines. The turbine engine 26, for example, may alternatively be configured as a turbojet engine, a propfan engine, a pusher fan engine or any other type of turbine engine operable to power the operation of the mechanical load 22. However, for ease of description, the mechanical load 22 is described below as a fan section 34 of the turbine engine 26, and the driven rotor 30 is described below as the fan rotor 32 within the fan section 34.

The turbine engine 26 extends axially along an axis 36 from a forward, upstream end of the turbine engine 26 to an aft, downstream end of the turbine engine 26. Briefly, this axis 36 may be a centerline axis of the turbine engine 26 and its members 24 and 32. The axis 36 may also be a rotational axis of one or more members of the turbine engine 26 and its engine core 24 including the fan rotor 32 - the driven rotor 30. The turbine engine 26 of FIG. 1 includes the fan section 34, a compressor section 38, a combustor section 39 and a turbine section 40. The turbine section 40 of FIG. 1 includes a high pressure turbine (HPT) section 40A and a low pressure turbine (LPT) section 40B, which LPT section 40B of FIG. 1 is a power turbine (PT) section for driving rotation of the fan rotor 32.

The compressor section 38 includes a compressor rotor 42. The HPT section 40A includes a high pressure turbine (HPT) rotor 44. The LPT section 40B includes a low pressure turbine (LPT) rotor 46. The fan rotor 32, the compressor rotor 42, the HPT rotor 44 and the LPT rotor 46 each respectively include one or more arrays (e.g., stages) of rotor blades, where the rotor blades in each array are arranged circumferentially around and are connected to a respective rotor disk or hub. The rotor blades in each array, for example, may be formed integral with or mechanically fastened, welded, brazed and/or otherwise attached to the respective rotor disk and/or hub.

The compressor rotor 42 is coupled to and rotatable with the HPT rotor 44. The compressor rotor 42 of FIG. 1, for example, is connected to the HPT rotor 44 by a high speed shaft 48. At least (or only) the compressor rotor 42, the HPT rotor 44 and the high speed shaft 48 collectively form a high speed rotating assembly 50; e.g., a high speed spool of the engine core 24. The LPT rotor 46 of FIG. 1 is connected to a low speed shaft 52. At least (or only) the LPT rotor 46 and the low speed shaft 52 collectively form a low speed rotating assembly 54; e.g., a low speed spool / a power turbine spool of the engine core 24. This low speed rotating assembly 54 is further coupled to the fan rotor 32 - the driven rotor 30 - through a drivetrain 56. This drivetrain 56 may be configured as a geared drivetrain, where a geartrain 58 (e.g., a transmission, a speed change device, an epicyclic geartrain, etc.) is disposed between and operatively couples the fan rotor 32 to the low speed rotating assembly 54 and its LPT rotor 46. With this arrangement, the fan rotor 32 may rotate at a different (e.g., slower) rotational velocity than the low speed rotating assembly 54 and its LPT rotor 46. However, the drivetrain 56 may alternatively be configured as a direct drive drivetrain, where the geartrain 58 is omitted. With such an arrangement, the fan rotor 32 rotates at a common (the same) rotational velocity as the low speed rotating assembly 54 and its LPT rotor 46. Referring again to FIG. 1, each of the rotating assemblies 50, 54 and its members as well as the fan rotor 32 may be rotatable about the axis 36.

The turbine engine 26 of FIG. 1 includes a (e.g., annular) core flowpath 60 and a (e.g., annular) bypass flowpath 62. Here, the bypass flowpath 62 is a ducted flowpath within the aircraft powerplant 20 and its turbine engine 26. The bypass flowpath 62, however, may alternatively be an open flowpath where the driven rotor 30 is alternatively configured as the open propulsor rotor, or the bypass flowpath 62 may be omitted where the driven rotor 30 is alternatively configured as the generator rotor. Referring again to FIG. 1, the core flowpath 60 extends within the turbine engine 26 and its engine core 24 from an airflow inlet 64 into the core flowpath 60 to a combustion products exhaust 66 from the core flowpath 60. More particularly, the core flowpath 60 extends from the core inlet 64, sequentially through the compressor section 38, the combustor section 39, the HPT section 40A and the LPT section 40B, to the core exhaust 66. The bypass flowpath 62 of FIG. 1 extends outside of the engine core 24 thereby bypassing the engine core 24 and its engine sections 38-40B.

During operation of the turbine engine 26, air is directed across the fan rotor 32 (e.g., the propulsor rotor) and into the engine core 24 through the core inlet 64. This air entering the core flowpath 60 may be referred to as core air. The core air is compressed by the compressor rotor 42 and directed into a combustion chamber 68 (e.g., an annular combustion chamber) within a combustor 70 (e.g., an annular combustor) of the combustor section 39. Fuel is injected into the combustion chamber 68 by one or more fuel injectors 72 and mixed with the compressed core air to provide a fuel-air mixture. This fuel-air mixture is ignited and combustion products thereof flow through and sequentially drive rotation of the HPT rotor 44 and the LPT rotor 46. The rotation of the HPT rotor 44 drives rotation of the compressor rotor 42 and, thus, the compression of the air received from the core inlet 64. The rotation of the LPT rotor 46 drives rotation of the fan rotor 32 - the driven rotor 30. The rotation of the fan rotor 32 propels some of the air flow thereacross (e.g., the air not entering the engine core 24) through the bypass flowpath 62 to provide engine thrust. Of course, where the driven rotor 30 is alternatively configured as the open propulsor rotor, the rotation of this open propulsor rotor may propel air outside of the aircraft powerplant 20 and its turbine engine 26. Where the driven rotor 30 is alternatively configured as the generator rotor, the rotation of this generator rotor may facilitate generation of electricity.

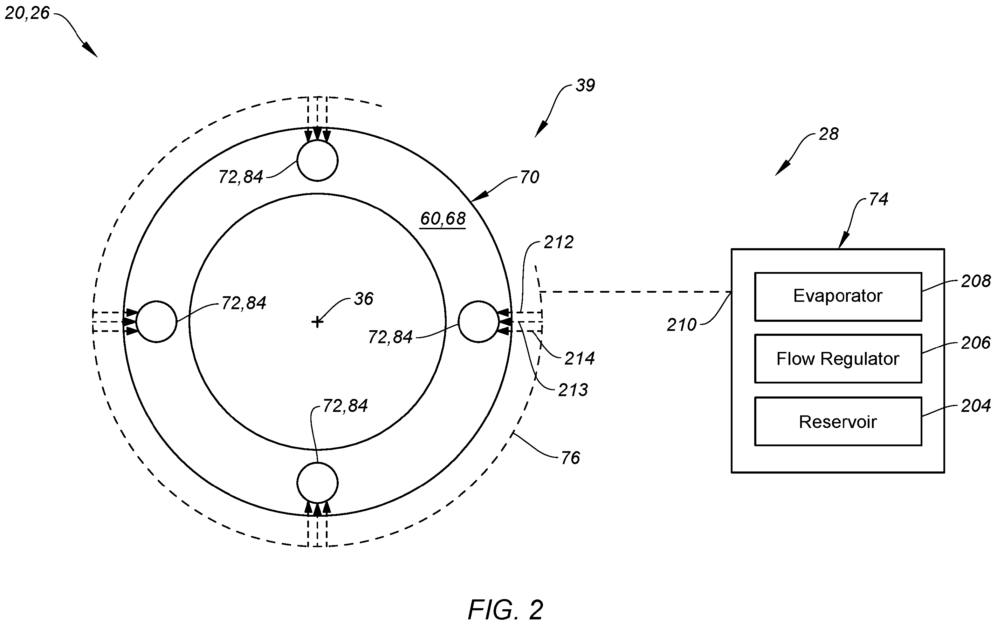

Referring to FIG. 2, the fuel delivery system 28 is configured to deliver the fuel to the combustor 70 for combustion as described above. Here, the fuel delivered by the fuel delivery system 28 is a gaseous fuel. The fuel delivery system 28 of FIG. 2, for example, includes the one or more fuel injectors 72, a gaseous fuel source 74 and a gaseous fuel manifold 76.

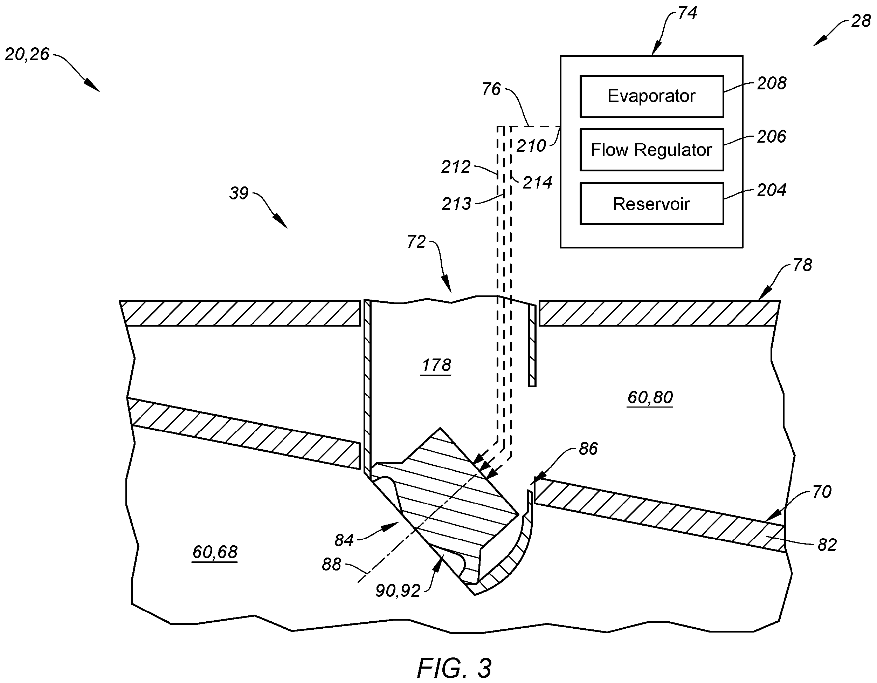

The fuel injectors 72 of FIG. 2 are arranged and may be equispaced circumferentially about the axis 36 in an annular array; e.g., a circular array. Referring to FIG. 3, each of the fuel injectors 72 may extend from an engine case 78, across a diffuser plenum 80 surrounding the combustor 70, to a wall 82 of the combustor 70. Briefly, the combustor wall 82 may be a sidewall of the combustor 70 or a bulkhead of the combustor 70 depending on the specific combustor configuration and/or fuel injector placement. Each of the fuel injectors 72 includes a fuel nozzle 84 mated with the combustor wall 82. The fuel nozzle 84 of FIG. 3, for example, projects through (or partially into) a port 86 in the combustor wall 82.

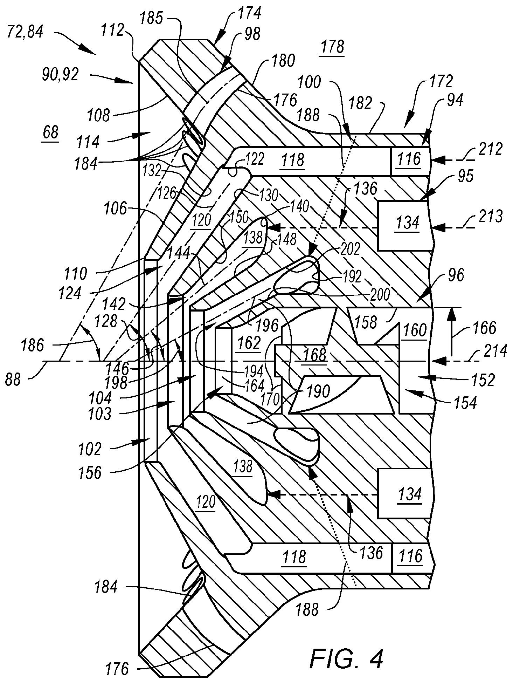

Referring to FIG. 4, the fuel nozzle 84 extends longitudinally along a longitudinal centerline 88 of the fuel nozzle 84 to a distal end 90 (e.g., a tip) of the fuel nozzle 84. The fuel nozzle 84 of FIG. 4, for example, projects longitudinally along its nozzle centerline 88 through the respective combustor wall port 86 (see FIG. 3) to the nozzle distal end 90, and the nozzle distal end 90 is located within (or adjacent) the combustion chamber 68. The fuel nozzle 84 of FIG. 4 includes a concave nozzle face 92, one or more gaseous fuel circuits 94-96 and one or more air circuits 98 and 100. This fuel nozzle 84 may also include one or more nozzle outlet passages 102-1044.

The nozzle face 92 is located at (e.g., on, adjacent or proximate) the nozzle distal end 90. The nozzle face 92 of FIG. 4, for example, includes and is formed by a nozzle inner face surface 106 and a nozzle outer face surface 108. The nozzle face 92 and each of its face surfaces 106, 108 extends circumferentially about (e.g., completely around) the nozzle centerline 88. The nozzle face 92 and each of its face surfaces 106, 108 may thereby have a full-hoop (e.g., annular) geometry.

The inner face surface 106 extends radially outward (radially away from the nozzle centerline 88) from an inner edge 110 of the nozzle face 92 to an inner periphery of the outer face surface 108. The inner face surface 106 also extends longitudinally in a first longitudinal direction (away from the nozzle distal end 90 along the nozzle centerline 88) from the nozzle face inner edge 110 to the inner periphery of the outer face surface 108. The inner face surface 106 thereby has a radially tapered (e.g., sloped) geometry; e.g., the inner face surface 106 may be a frustoconical surface.

The outer face surface 108 extends radially outward from an outer periphery of the inner face surface 106 to an outer edge 112 of the nozzle face 92. The outer face surface 108 also extends longitudinally in a second longitudinal direction (towards the nozzle distal end 90 along the nozzle centerline 88) from the outer periphery of the inner face surface 106 to the nozzle face outer edge 112. The outer face surface 108 thereby has a radially tapered (e.g., sloped) geometry; e.g., the outer face surface 108 may be a frustoconical surface. A longitudinal length of the outer face surface 108 may be (e.g., slightly) longer than a longitudinal length of the inner face surface 106. The nozzle face inner edge 110 may thereby be (e.g., slightly) longitudinally recessed from the nozzle face outer edge 112 along the nozzle centerline 88. The present invention, however, is not limited to such an exemplary arrangement. For example, the nozzle face inner edge 110 and the nozzle face outer edge 112 may alternatively be longitudinally aligned. In another example, the nozzle face outer edge 112 may be (e.g., slightly) longitudinally recessed from the nozzle face inner edge 110 along the nozzle centerline 88.

The nozzle face 92 of FIG. 4 and its face surfaces 106 and 108 form a recess 114 in the fuel nozzle 84 at its nozzle distal end 90. This recess 114 projects longitudinally along the nozzle centerline 88 into the fuel nozzle 84 to the inner face surface 106 and the outer face surface 108. The recess 114 extends radially within the fuel nozzle 84 from the inner face surface 106 to the outer face surface 108. The recess 114 extends within the fuel nozzle 84 circumferentially about (e.g., completely around) the nozzle centerline 88, providing the recess 114 with a full-hoop (e.g., annular) geometry for example.

The outer gaseous fuel circuit 94 of FIG. 4 includes an outer circuit fuel gallery 116, one or more outer circuit fuel passages 118 and an outer circuit fuel annulus 120. The outer circuit fuel gallery 116 extends longitudinally within the fuel nozzle 84 between opposing longitudinally sides of the outer circuit fuel gallery 116. The outer circuit fuel gallery 116 extends radially within the fuel nozzle 84 between an inner side of the outer circuit fuel gallery 116 and an outer side of the outer circuit fuel gallery 116. The outer circuit fuel gallery 116 extends circumferentially about (e.g., completely around, or substantially around) the nozzle centerline 88 within the fuel nozzle 84. The outer circuit fuel gallery 116 may thereby have a full-hoop (e.g., annular) geometry, or a substantially full-hoop geometry.

The outer circuit fuel passages 118 are arranged and may be equispaced circumferentially about the nozzle centerline 88 in an annular array; e.g., a circular array. Each of these outer circuit fuel passages 118 extends within the fuel nozzle 84 from the outer circuit fuel gallery 116 to the outer circuit fuel annulus 120. Each of the outer circuit fuel passages 118 thereby fluidly couples the outer circuit fuel gallery 116 to the outer circuit fuel annulus 120. More particularly, each of the outer circuit fuel passages 118 extends longitudinally along the nozzle centerline 88 from the downstream end of the outer circuit fuel gallery 116 to an upstream end 122 of the outer circuit fuel annulus 120. Each of the outer circuit fuel passages 118 is fluidly coupled to the outer circuit fuel annulus 120 at its upstream end 122. Here, a centerline of each outer circuit fuel passage 118 may be parallel with, or close to parallel with (e.g., within plus/minus ten degrees (10°) of) the nozzle centerline 88, when viewed in a reference plane parallel with (e.g., including) the nozzle centerline 88. Each outer circuit fuel passage 118 may also be arranged at a tangential angle of plus/minus thirty degrees (30°) in a tangential direction with an offset to generate swirl to the fuel flow. While the outer circuit fuel passages 118 are described above as discrete passages, it is contemplated these outer circuit fuel passages 118 may be merged to provide an outer circuit fuel annulus.

The outer circuit fuel annulus 120 extends within the fuel nozzle 84 from its upstream end 122 to an annular outlet 124 from the outer gaseous fuel circuit 94 and its outer circuit fuel annulus 120 adjacent the exterior outlet passage 102. The outer circuit fuel annulus 120 thereby fluidly couples the outer circuit fuel passages 118 to the exterior outlet passage 102. More particularly, the outer circuit fuel annulus 120 extends longitudinally along the nozzle centerline 88 in the second longitudinal direction from the outer fuel annulus upstream end 122 to the outer circuit fuel outlet 124 / the exterior outlet passage 102. The outer circuit fuel annulus 120 also extends radially inward (radially towards the nozzle centerline 88) from the outer fuel annulus upstream end 122 to the outer circuit fuel outlet 124 / the exterior outlet passage 102. A centerline 126 of any radial section of the outer circuit fuel annulus 120 may thereby be angularly offset from the nozzle centerline 88 by a non-zero offset angle 128 when viewed in the reference plane. This outer fuel annulus offset angle 128 may be an acute angle equal to or greater than thirty degrees (30°), or forty-five degrees (45°); e.g., about sixty degrees (60°). For example, the outer fuel annulus offset angle 128 may be between thirty degrees (30°) and seventy-five degrees (75°).

The outer circuit fuel annulus 120 extends widthwise (e.g., radially) within the fuel nozzle 84 from an inner surface 130 of the outer circuit fuel annulus 120 to an outer surface 132 of the outer circuit fuel annulus 120. The outer circuit fuel annulus 120 extends circumferentially about (e.g., completely around) the nozzle centerline 88 within the fuel nozzle 84, providing the outer circuit fuel annulus 120 with a full-hoop (e.g., annular) geometry. This outer fuel annulus geometry of FIG. 4 also radially tapers inward towards the nozzle centerline 88 as the outer circuit fuel annulus 120 extends longitudinally to the exterior outlet passage 102. Each outer fuel annulus surface 130, 132 of FIG. 4, for example, has a radially tapered (e.g., sloped) geometry; e.g., each outer fuel annulus surface 130, 132 may be a frustoconical surface. Here, the outer fuel annulus surfaces 130 and 132 are parallel when viewed in the reference plane.

The intermediate (e.g., mid) gaseous fuel circuit 95 of FIG. 4 includes an intermediate circuit fuel gallery 134, one or more intermediate circuit fuel passages 136 and an intermediate circuit fuel annulus 138. The intermediate circuit fuel gallery 134 extends longitudinally within the fuel nozzle 84 between opposing longitudinally sides of the intermediate circuit fuel gallery 134. The intermediate circuit fuel gallery 134 extends radially within the fuel nozzle 84 between an inner side of the intermediate circuit fuel gallery 134 and an outer side of the intermediate circuit fuel gallery 134. The intermediate circuit fuel gallery 134 extends circumferentially about (e.g., completely around, or substantially around) the nozzle centerline 88 within the fuel nozzle 84. The intermediate circuit fuel gallery 134 may thereby have a full-hoop (e.g., annular) geometry, or a substantially full-hoop geometry.

The intermediate circuit fuel passages 136 are arranged and may be equispaced circumferentially about the nozzle centerline 88 in an annular array; e.g., a circular array. Each of these intermediate circuit fuel passages 136 extends within the fuel nozzle 84 from the intermediate circuit fuel gallery 134 to the intermediate circuit fuel annulus 138. Each of the intermediate circuit fuel passages 136 thereby fluidly couples the intermediate circuit fuel gallery 134 to the intermediate circuit fuel annulus 138. More particularly, each of the intermediate circuit fuel passages 136 extends longitudinally along the nozzle centerline 88 from the downstream end of the intermediate circuit fuel gallery 134 to an upstream end 140 of the intermediate circuit fuel annulus 138. Each of the intermediate circuit fuel passages 136 is fluidly coupled to the intermediate circuit fuel annulus 138 at its upstream end 140. Here, a centerline of each intermediate circuit fuel passage 136 may be parallel with, or close to parallel with (e.g., within plus/minus ten degrees (10°) of) the nozzle centerline 88, when viewed in the reference plane. Each intermediate circuit fuel passage 136 may also be arranged at a tangential angle of plus/minus forty-five degrees (45°) in a tangential direction with an offset to generate swirl to the fuel flow.

The intermediate circuit fuel annulus 138 extends within the fuel nozzle 84 from its upstream end 140 to an annular outlet 142 from the intermediate gaseous fuel circuit 95 and its intermediate circuit fuel annulus 138 adjacent the intermediate outlet passage 103. The intermediate circuit fuel annulus 138 thereby fluidly couples the intermediate circuit fuel passages 136 to the intermediate outlet passage 103. More particularly, the intermediate circuit fuel annulus 138 extends longitudinally along the nozzle centerline 88 in the second longitudinal direction from the intermediate fuel annulus upstream end 140 to the intermediate circuit fuel outlet 142 / the intermediate outlet passage 103. The intermediate circuit fuel annulus 138 also extends radially inward from the intermediate fuel annulus upstream end 140 to the intermediate circuit fuel outlet 142 / the intermediate outlet passage 103. A centerline 144 of any radial section of the intermediate circuit fuel annulus 138 may thereby be angularly offset from the nozzle centerline 88 by a non-zero offset angle 146 when viewed in the reference plane. This intermediate fuel annulus offset angle 146 may be an acute angle equal to or greater than fifteen degrees (15°), or thirty degrees (30°); e.g., about forty-five degrees (45°). For example, the intermediate fuel annulus offset angle 146 may be between fifteen degrees (15°) and sixty degrees (60°). The intermediate fuel annulus offset angle 146 is less than the outer fuel annulus offset angle 128.

The intermediate circuit fuel annulus 138 extends widthwise (e.g., radially) within the fuel nozzle 84 from an inner surface 148 of the intermediate circuit fuel annulus 138 to an outer surface 150 of the intermediate circuit fuel annulus 138. The intermediate circuit fuel annulus 138 extends circumferentially about (e.g., completely around) the nozzle centerline 88 within the fuel nozzle 84, providing the intermediate circuit fuel annulus 138 with a full-hoop (e.g., annular) geometry. This intermediate fuel annulus geometry of FIG. 4 also radially tapers inward towards the nozzle centerline 88 as the intermediate circuit fuel annulus 138 extends longitudinally to the exterior outlet passage 102. Each intermediate fuel annulus surface 148, 150 of FIG. 4, for example, has a radially tapered (e.g., sloped) geometry; e.g., each intermediate fuel annulus surface 148, 150 may be a frustoconical surface. Here, the intermediate fuel annulus outer surface 150 radially converges towards the intermediate fuel annulus inner surface 148 (when viewed in the reference plane) as the intermediate circuit fuel annulus 138 extends in the second longitudinal direction towards (e.g., to) the intermediate outlet passage 103.

The intermediate circuit fuel outlet 142 may be longitudinally recessed from the outer circuit fuel outlet 124. The outer circuit fuel outlet 124 of FIG. 4, for example, is located longitudinally along the nozzle centerline 88 between the intermediate circuit fuel outlet 142 and the nozzle distal end 90. The outer circuit fuel outlet 124 of FIG. 4 is also located radially outboard of the intermediate circuit fuel outlet 142.

The inner gaseous fuel circuit 96 of FIG. 4 includes an inner circuit fuel passage 152 and a fuel swirler 154. The inner circuit fuel passage 152 may be configured as a central bore in the fuel nozzle 84. The inner circuit fuel passage 152 of FIG. 4, for example, is coaxial with the nozzle centerline 88. This inner circuit fuel passage 152 projects longitudinally along the nozzle centerline 88 in the second longitudinal direction within the fuel nozzle 84 to a solid (e.g., non-annular) outlet 156 from the inner circuit fuel passage 152 and its inner circuit fuel passage 152, which outlet 156 is adjacent the interior outlet passage 104. The inner circuit fuel passage 152 is thereby fluidly coupled to the interior outlet passage 104 through its inner circuit fuel outlet 156.

The inner circuit fuel passage 152 extends widthwise (e.g., radially) within the fuel nozzle 84 from the nozzle centerline 88 to an outer side 158 of the inner circuit fuel passage 152. The inner circuit fuel passage 152 extends circumferentially about (e.g., completely around) the nozzle centerline 88 within the fuel nozzle 84, providing the inner circuit fuel passage 152 with a full-hoop solid geometry. This inner fuel passage geometry of FIG. 4 also radially tapers inward towards the nozzle centerline 88 as the inner circuit fuel passage 152 extends longitudinally in the second longitudinal direction towards the interior outlet passage 104. The inner circuit fuel passage 152 of FIG. 4, for example, includes an upstream (e.g., non-tapered) section 160, an intermediate (e.g., tapered) section 162 and a downstream (e.g., non-tapered) section 164. A radius 166 from the nozzle centerline 88 to the inner fuel passage outer side 158 longitudinally along the upstream section 160 is uniform; e.g., constant. The inner fuel passage radius 166 from the nozzle centerline 88 to the inner fuel passage outer side 158 longitudinally along the intermediate section 162 decreases as the inner circuit fuel passage 152 extends longitudinally in the second longitudinal direction from the upstream section 160 to the downstream section 164, or alternatively to the inner circuit fuel outlet 156 if the downstream section 164 is omitted. The inner fuel passage radius 166 from the nozzle centerline 88 to the inner fuel passage outer side 158 longitudinally along the downstream section 164 is uniform. The downstream section 164 and the upstream section 160 of FIG. 4 are thereby non-tapered sections of the inner circuit fuel passage 152, whereas the intermediate section 162 is a tapered section of the inner circuit fuel passage 152.

The inner circuit fuel outlet 156 may be longitudinally recessed from the outer circuit fuel outlet 124 and the intermediate circuit fuel outlet 142. The intermediate circuit fuel outlet 142 of FIG. 4, for example, is located longitudinally along the nozzle centerline 88 between the inner circuit fuel outlet 156 and the nozzle distal end 90. The intermediate circuit fuel outlet 142 of FIG. 4 is also located radially outboard of the inner circuit fuel outlet 156.

The fuel swirler 154 is disposed within the inner circuit fuel passage 152 upstream of the inner circuit fuel outlet 156. The fuel swirler 154 of FIG. 4, for example, is disposed within the upstream section 160 of the inner circuit fuel passage 152, upstream of the other inner fuel passage sections 162, 164. The fuel swirler 154 of FIG. 4 includes a center body 168 and one or more swirler vanes 170; e.g., helical vanes. The center body 168 of FIG. 4 is coaxial with the nozzle centerline 88. The swirler vanes 170 are arranged and may be equispaced circumferentially around the center body 168 and the nozzle centerline 88. Each of the swirler vanes 170 projects radially out from the center body 168 to the inner fuel passage outer side 158. Each of the swirler vanes 170 of FIG. 4 may also extend along an entire longitudinal length of the center body 168, or along a substantial portion of the center body longitudinal length. The present invention, however, is not limited to such an exemplary fuel swirler configuration.

The outer air circuit 98 is disposed radially outboard of the gaseous fuel circuits 94-96 and the inner air circuit 100. For example, the outer gaseous fuel circuit 94, the intermediate gaseous fuel circuit 95, the inner gaseous fuel circuit 96 and the inner air circuit 100 of FIG. 4 are configured with a base 172 of the fuel nozzle 84. The outer air circuit 98 of FIG. 4, by contrast, is configured with an outer peripheral wall 174 (e.g., a flange) of the fuel nozzle 84. This nozzle wall 174 is disposed at the nozzle distal end 90 and partially forms the nozzle face 92; e.g., the nozzle wall 174 forms the outer face surface 108. The nozzle wall 174 is connected to (e.g., formed integral with or otherwise attached to) the nozzle base 172. The nozzle wall 174 of FIG. 4 projects radially outward from the nozzle base 172 to an outer distal end of the nozzle wall 174.

The outer air circuit 98 includes one or more outer circuit air passages 176. These outer circuit air passages 176 are arranged and may be equispaced circumferentially about the nozzle centerline 88 in an annular array; e.g., a circular array. Each of these outer circuit air passages 176 extends diagonally inward through the nozzle wall 174 from an internal volume 178 adjacent a backside 180 of the nozzle wall 174 / an outer side 182 of the nozzle base 172 to the nozzle distal end 90 / the outer face surface 108. More particularly, each outer circuit air passage 176 of FIG. 4 extends longitudinally in the second longitudinal direction and radially in the radial inward direction to its respective outer circuit air outlet 184. The outer air circuit 98 and its outer circuit air passages 176 thereby fluidly couple the internal volume 178 to the combustion chamber 68. Referring to FIG. 3, the internal volume 178 may be a cavity within the respective fuel injector 72 which fluidly couples the diffuser plenum 80 to the outer air circuit 98 and the inner air circuit 100. Alternatively, the internal volume 178 may be the diffuser plenum 80 itself or another air source within the turbine engine 26 and outside of the combustor 70.

Referring to FIG. 4, a centerline 185 of each outer circuit air passage 176 at its respective outer circuit air outlet 184 is angularly offset from the nozzle centerline 88 by a non-zero offset angle 186 when viewed in the reference plane. This outer air passage offset angle 186 may be an acute angle equal to or greater than thirty degrees (30°), or forty-five degrees (45°); e.g., about sixty degrees (60°). The outer air passage offset angle 186 may be equal to or less than the outer fuel annulus offset angle 128. In FIG. 4, each outer circuit air passage 176 and its centerline 185 is shown with a curved trajectory. It is contemplated, however, the trajectory of the outer circuit air passage 176 and its centerline 185 may alternatively be straight or otherwise shaped. Moreover, while a width of each outer circuit air passage 176 is shown as increasing as that outer circuit air passage 176 extends along the centerline 185 to the respective outer circuit air outlet 184, it is contemplated the width may alternatively decrease or otherwise change or still alternatively be uniform (e.g., constant).

The inner air circuit 100 of FIG. 4 includes one or more inner circuit air passages 188 and an inner circuit air annulus 190. Each of these inner circuit air passages 188 extends from the internal volume 178 to the inner circuit air annulus 190. More particularly, each inner circuit air passage 188 of FIG. 4 projects diagonally inward into the nozzle base 172 from the nozzle base outer side 182 to the inner circuit air annulus 190, for example adjacent an upstream end 192 of the inner circuit air annulus 190. Each inner circuit air passage 188 may thereby be fluidly coupled to the inner circuit air annulus 190 at the inner air annulus upstream end 192.

The inner circuit air annulus 190 extends within the fuel nozzle 84 from its upstream end 192 to an annular outlet 194 from the inner air circuit 100 and its inner circuit air annulus 190, which outlet 194 is adjacent the interior outlet passage 104. The inner circuit air annulus 190 thereby fluidly couples the inner circuit air passages 188 to the interior outlet passage 104. More particularly, the inner circuit air annulus 190 extends longitudinally along the nozzle centerline 88 in the second longitudinal direction from the inner air annulus upstream end 192 to the inner circuit air outlet 194 / the interior outlet passage 104. The inner circuit air annulus 190 also extends radially inward from the inner air annulus upstream end 192 to the inner circuit air outlet 194 / the interior outlet passage 104. A centerline 196 of any radial section of the inner circuit air annulus 190 may thereby be angularly offset from the nozzle centerline 88 by a non-zero offset angle 198 when viewed in the reference plane. This inner air annulus offset angle 198 may be an acute angle equal to or greater than five degrees (5°), or fifteen degrees (15°); e.g., about twenty-five degrees (25°) or thirty degrees (30°). The inner air annulus offset angle 198 is less than the outer fuel annulus offset angle 128, and may be equal to or less than the intermediate fuel annulus offset angle 146.

The inner circuit air annulus 190 extends widthwise (e.g., radially) within the fuel nozzle 84 from an inner surface 200 of the inner circuit air annulus 190 to an outer surface 202 of the inner circuit air annulus 190. The inner circuit air annulus 190 extends circumferentially about (e.g., completely around) the nozzle centerline 88 within the fuel nozzle 84, providing the inner circuit air annulus 190 with a full-hoop (e.g., annular) geometry. This inner circuit air annulus 190 of FIG. 4 also radially tapers inward towards the nozzle centerline 88 as the inner circuit air annulus 190 extends longitudinally to the interior outlet passage 104. Each inner air annulus surface 200, 202 of FIG. 4, for example, has a radially tapered (e.g., sloped) geometry; e.g., each inner air annulus surface 200, 202 may be a frustoconical surface. Here, at least at the inner circuit air outlet 194, the inner air annulus surfaces 200 and 202 are parallel when viewed in the reference plane.

The inner circuit air outlet 194 may be longitudinally recessed from the outer circuit fuel outlet 124 and the intermediate circuit fuel outlet 142. The intermediate circuit fuel outlet 142 of FIG. 4, for example, is located longitudinally along the nozzle centerline 88 between the inner circuit air outlet 194 and the nozzle distal end 90. The intermediate circuit fuel outlet 142 of FIG. 4 is also located radially outboard of the inner circuit air outlet 194. By contrast, the inner circuit air outlet 194 of FIG. 4 is located longitudinally along the nozzle centerline 88 between the inner circuit fuel outlet 156 and the nozzle distal end 90, or may be longitudinally aligned with the inner circuit fuel outlet 156. The inner circuit air outlet 194 of FIG. 4 is also located radially outboard of the inner circuit fuel outlet 156.

The exterior outlet passage 102 is disposed at the nozzle distal end 90. The exterior outlet passage 102 of FIG. 4, for example, extends longitudinally along the nozzle centerline 88 within the fuel nozzle 84 from (a) the intermediate outlet passage 103 and the outer circuit fuel outlet 124 to (b) an outlet orifice in the nozzle face 92 at the nozzle face inner edge 110 of the inner face surface 106. The exterior outlet passage 102 of FIG. 4 thereby fluidly couples the intermediate outlet passage 103 and the outer circuit fuel outlet 124 to the combustion chamber 68. The exterior outlet passage 102 of FIG. 4 projects radially outward within the fuel nozzle 84 from the nozzle centerline 88 to an outer side of the exterior outlet passage 102. This exterior outlet passage outer side may be parallel with, or close to parallel with (e.g., within plus/minus five degrees (5°) of) the nozzle centerline 88 when viewed in the reference plane. The exterior outlet passage 102 extends circumferentially about (e.g., completely around) the nozzle centerline 88 within the fuel nozzle 84. The exterior outlet passage 102 may thereby have a solid (e.g., non-annular) geometry; e.g., a solid circular geometry.

The intermediate outlet passage 103 of FIG. 4 extends longitudinally along the nozzle centerline 88 within the fuel nozzle 84 from (a) the interior outlet passage 104 and the intermediate circuit fuel outlet 142 to (b) the exterior outlet passage 102. The intermediate outlet passage 103 of FIG. 4 thereby fluidly couples the interior outlet passage 104 and the intermediate circuit fuel outlet 142 to the exterior outlet passage 102. The intermediate outlet passage 103 of FIG. 4 projects radially outward within the fuel nozzle 84 from the nozzle centerline 88 to an outer side of the intermediate outlet passage 103. This intermediate outlet passage outer side may be parallel with, or close to parallel with (e.g., within plus/minus five degrees (5°) of) the nozzle centerline 88 when viewed in the reference plane. The intermediate outlet passage 103 extends circumferentially about (e.g., completely around) the nozzle centerline 88 within the fuel nozzle 84. The intermediate outlet passage 103 may thereby have a solid (e.g., non-annular) geometry; e.g., a solid circular geometry.

The interior outlet passage 104 of FIG. 4 extends longitudinally along the nozzle centerline 88 within the fuel nozzle 84 from (a) the inner circuit air outlet 194 and the inner circuit fuel outlet 156 to (b) the intermediate outlet passage 103. The interior outlet passage 104 of FIG. 4 thereby fluidly couples the inner circuit air outlet 194 and the inner circuit fuel outlet 156 to the intermediate outlet passage 103. The interior outlet passage 104 of FIG. 4 projects radially outward within the fuel nozzle 84 from the nozzle centerline 88 to an outer side of the interior outlet passage 104. This interior outlet passage outer side may be parallel with, or close to parallel with (e.g., within plus/minus five degrees (5°) of) the nozzle centerline 88 when viewed in the reference plane. The interior outlet passage 104 extends circumferentially about (e.g., completely around) the nozzle centerline 88 within the fuel nozzle 84. The interior outlet passage 104 may thereby have a solid (e.g., non-annular) geometry; e.g., a solid circular geometry.

Referring to FIG. 2, the gaseous fuel source 74 includes a fuel reservoir 204, a fuel flow regulator 206 and a fuel evaporator 208. The fuel reservoir 204 is configured to store a quantity of fuel (e.g., in its liquid phase) before, during and/or after aircraft powerplant operation. The fuel reservoir 204, for example, may be configured as or otherwise include a tank, a cylinder, a pressure vessel, a bladder or any other type of (e.g., insulated) fuel storage container. The fuel flow regulator 206 is configured to direct a flow of the fuel (e.g., in its liquid phase) from the fuel reservoir 204 to the fuel evaporator 208. The fuel flow regulator 206, for example, may be configured as or otherwise include a fuel compressor, a fuel pump and/or a fuel valve (or valve system). The fuel evaporator 208 is configured to facilitate evaporation of the fuel from its liquid phase to a gaseous phase so as to output the gaseous fuel from an outlet 210 of the gaseous fuel source 74. This gaseous fuel source outlet 210 may be fluidly coupled to each of the gaseous fuel circuits 94-96 (see FIG. 4) sequentially through the gaseous fuel manifold 76 and a respective gaseous fuel feed passage 212-214, which gaseous fuel feed passage 212-214 fluidly couples the gaseous fuel manifold 76 to the respective fuel nozzle member 116, 134, 152 (see FIG. 4) for example. Alternatively, each of the gaseous fuel circuits 94-96 (see FIG. 4) may be independently fluidly coupled to the gaseous fuel source 74.

The gaseous fuel may be a non-hydrocarbon gas. The gaseous fuel, for example, may be or otherwise include hydrogen gas (H₂ gas), and the fuel stored within the fuel reservoir 204 may be liquid hydrogen (liquid H₂). The gaseous fuel, however, is not limited to non-hydrocarbon gases. The gaseous fuel, for example, may alternatively by or otherwise include gaseous methane (e.g., natural gas) or propane. However, use of the non-hydrocarbon gas such as the hydrogen gas may be particularly beneficial for reduction in emissions from the turbine engine 26 (see FIG. 1). The gaseous fuel may therefore be generally described below as the hydrogen gas for ease of description.

During fuel delivery system operation, each fuel nozzle 84 receives the gaseous fuel from the gaseous fuel source 74. Referring to FIG. 4, this gaseous fuel is directed through each of the gaseous fuel circuits 94-96 for injection into the combustion chamber 68. Simultaneously, each of the air circuits directs a portion of the compressed core air received from the internal volume 178 into the combustion chamber 68. This compressed core air may mix with the flows of the gaseous fuel (e.g., within the combustion chamber 68) to provide the fuel-air mixture for combustion. With the fuel nozzle arrangement of FIG. 4, the gaseous fuel and the compressed core air may substantially mix downstream of the respective fuel nozzle 84 within the combustion chamber 68. This may reduce or prevent the flame from attaching to the nozzle face 92 as well as facilitate tailoring flame size, flame shape, etc. In addition, swirling the fuel through the inner circuit fuel passage 152 facilitates mixing the gaseous fuel with the air. The fuel swirler 154 may also facilitate provision of a stable and controlled flame shape.

For ease of description, the gaseous fuel circuits 94-96 are described above as receiving the gaseous fuel simultaneously during operation. However, it is contemplated that the gaseous fuel may also or alternatively just be provided to any single one of the gaseous fuel circuits 94-96 or any two of the gaseous fuel circuits 94-96. For example, the inner gaseous fuel circuit 96 and its passages may be configured (e.g., shaped and sized) for low power conditions. The intermediate gaseous fuel circuit 95 and its passages may be configured (e.g., shaped and sized) for medium power conditions. The outer gaseous fuel circuit 94 and its passages may be configured (e.g., shaped and sized) for high power conditions, either alone or in combination with the inner gaseous fuel circuit 96 and/or the intermediate gaseous fuel circuit 95. Moreover, while the outer gaseous fuel circuit 94, the intermediate gaseous fuel circuit 95 and the inner gaseous fuel circuit 96 are each described as receiving the gaseous fuel, it is contemplated any one more of these fuel circuits 94-96 may alternatively receive a liquid fuel. The liquid fuel may be a hydrocarbon liquid. The liquid fuel, for example, may be or otherwise include kerosene, jet fuel (e.g., jet A fuel), sustainable aviation fuel (SAF) or any other power-to-liquid (PTL) fuel, or the like. The present invention, however, is not limited to the foregoing exemplary liquid fuels, nor to hydrocarbon liquids.

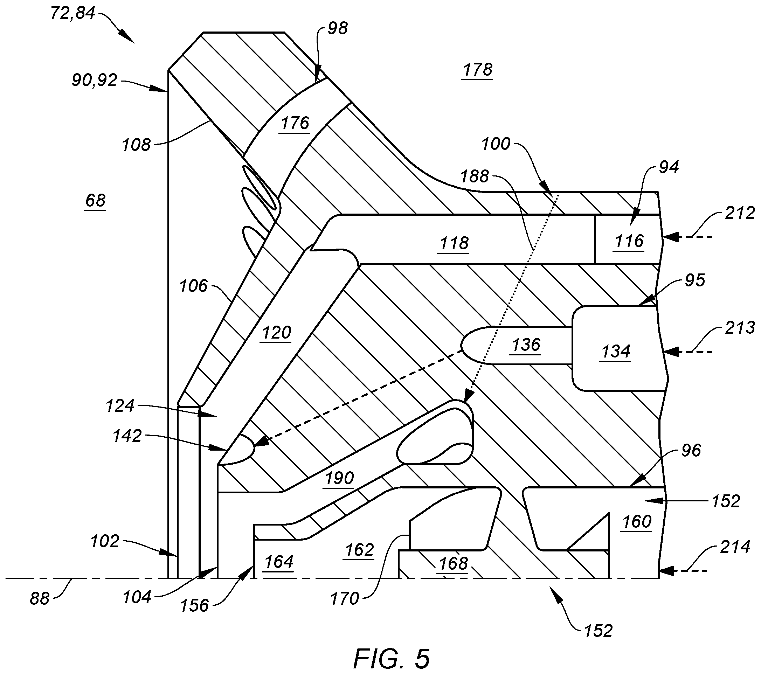

In some embodiments, referring to FIG. 4, the intermediate gaseous fuel circuit 95 may include the intermediate circuit fuel annulus 138 between the intermediate circuit fuel passages 136 and the intermediate outlet passage 103. In other embodiments, referring to FIG. 5, the intermediate circuit fuel annulus 138 as well as the intermediate circuit outlet passage 103 may be omitted. Each of the intermediate circuit fuel passages 136 of FIG. 5, for example, extends to a respective intermediate circuit fuel outlet 142 adjacent the exterior outlet passage 102 and/or the outer circuit fuel outlet 124. The intermediate circuit fuel passages 136, as described above, are arranged and may be equispaced circumferentially about the nozzle centerline 88 in the annular array. Each of these intermediate circuit fuel passages 136 may (or may not) have a common shape and width as that intermediate circuit fuel passage 136 extends from (or about) the intermediate circuit fuel gallery 134 to its respective intermediate circuit fuel outlet 142. The intermediate circuit fuel outlets 142 are arranged and may be equispaced circumferentially about the nozzle centerline 88 in an annular array; e.g., a circular array. This array of the intermediate circuit fuel outlets 142 may be disposed along a radial inner periphery of the outer circuit fuel outlet 124. Each of the intermediate circuit fuel passages 136 may have, at least at its intermediate circuit fuel outlet 142: (a) a shallow co-flow angle directed towards the nozzle centerline 88; (b) a straight-through flow design; (c) a radial outward flow direction up to forty-five degrees (45°) with respect to the nozzle centerline 88; and/or (d) a tangential angle between fifteen degrees (15°) and forty-five degrees (45°) to generate fuel swirl.

In some embodiments, each fuel nozzle 84 may be formed as a monolithic body. Each fuel nozzle 84, for example, may be cast, machined, additively manufactured and/or otherwise formed as a single unitary body. In other embodiments, however, each fuel nozzle 84 may alternatively be formed from a plurality of discretely formed members which are subsequently bonded, mechanically fastened and/or otherwise attached together to form the respective fuel nozzle 84.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An apparatus for a powerplant (20), the apparatus comprising:
a fuel nozzle (84) extending longitudinally along a nozzle centerline (88) to a distal end (90), the fuel nozzle (84) including a first gaseous fuel circuit (96) and a second gaseous fuel circuit (94, 95);
the first gaseous fuel circuit (96) including a first circuit fuel passage (152), a first circuit fuel outlet (156) and a fuel swirler (154), the first circuit fuel passage (152) extending longitudinally within the fuel nozzle (84) along the nozzle centerline (88), in a direction towards the distal end (90) of the fuel nozzle (84), to the first circuit fuel outlet (156), and the fuel swirler (154) disposed within the first circuit fuel passage (152) upstream of the first circuit fuel outlet (156); and
the second gaseous fuel circuit (94, 95) including a second circuit fuel annulus (120, 138) and a second circuit fuel outlet (124, 142), the second circuit fuel annulus (120, 138) extending longitudinally within the fuel nozzle (84) along the nozzle centerline (88), in the direction towards the distal end (90) of the fuel nozzle (84), to the second circuit fuel outlet (124, 142).

2. The apparatus of claim 1, wherein the fuel swirler (154) includes a center body (168) and one or more helical vanes (170) arranged circumferentially around and projecting radially out from the center body (168).

3. The apparatus of claim 1 or 2, wherein the first circuit fuel outlet (156) has a non-annular geometry.

4. The apparatus of any preceding claim, wherein:
the first circuit fuel passage (152) extends radially out to an outer side (158), and the first circuit fuel passage (152) includes a first section (160) and a second section (162) longitudinally between the first section (160) and the first circuit fuel outlet (156) along the nozzle centerline (88); and
a radius (166) to the outer side (158) of the first circuit fuel passage (152) is uniform longitudinally along the first section (160), and the radius (166) to the outer side (158) of the first circuit fuel passage decreases longitudinally along the second section (162).

5. The apparatus of claim 4, wherein:
the first circuit fuel passage (152) further includes a third section (164) longitudinally between the second section (162) and the first circuit fuel outlet (156) along the nozzle centerline (88), and the radius (166) to the outer side (158) of the first circuit fuel passage (152) is uniform longitudinally along the third section (164); and/or
the fuel swirler (154) is disposed within the first section (160) and upstream of the second section (162).

6. The apparatus of any preceding claim, wherein:
the second circuit fuel outlet (124, 142) is located radially outboard of the first circuit fuel outlet (156), and the second circuit fuel outlet (124, 142) is located longitudinally between the first circuit fuel outlet (156) and the distal end (90) of the fuel nozzle (84); and/or
the second circuit fuel annulus (120, 138) tapers radially inward towards the nozzle centerline (88) as the second circuit fuel annulus (120, 138) extends longitudinally along the nozzle centerline (88) to the second circuit fuel outlet (124, 142).

7. The apparatus of any preceding claim, wherein
the second gaseous fuel circuit (94, 95) further includes a plurality of second circuit fuel passages (118, 136) arranged circumferentially about the nozzle centerline (88); and
each of the plurality of second circuit fuel passages (118, 136) extends longitudinally within the fuel nozzle (84) to an upstream end (122, 140) of the second circuit fuel annulus (120, 138).

8. The apparatus of any preceding claim, wherein:
the fuel nozzle (84) further includes a third gaseous fuel circuit (94, 95), and the third gaseous fuel circuit (94, 95) includes a third circuit fuel annulus (120, 138) and a third circuit fuel outlet (124, 142); and
the third circuit fuel annulus (120, 138) extends longitudinally within the fuel nozzle (84) along the nozzle centerline (88), in the direction towards the distal end (90) of the fuel nozzle (84), to the third circuit fuel outlet (124, 142),
wherein, optionally, the third circuit fuel outlet (142) is located radially between the first circuit fuel outlet (156) and the second circuit fuel outlet (124), and the third circuit fuel outlet (142) is located longitudinally between the first circuit fuel outlet (156) and the second circuit fuel outlet (124) along the nozzle centerline (88).

9. The apparatus of any of claims 1 to 7, wherein:
the fuel nozzle (84) further includes a third gaseous fuel circuit (95), and the third gaseous fuel circuit (95) includes a plurality of third circuit fuel passages (136) and a plurality of third circuit fuel outlets (142); and
the plurality of third circuit fuel passages (136) are arranged circumferentially about the nozzle centerline (88), and each of the plurality of third circuit fuel passages (136) extends longitudinally within the fuel nozzle (84) along the nozzle centerline (88), in the direction towards the distal end (90) of the fuel nozzle (84), to a respective one of the plurality of third circuit fuel outlets (142),
wherein, optionally, the plurality of third circuit fuel outlets (142) are arranged along an inner periphery of the second circuit fuel outlet (124).

10. The apparatus of any preceding claim, wherein
the fuel nozzle (84) further includes an inner air circuit (100), and the inner air circuit (100) includes an inner circuit air annulus (190) and an inner circuit air outlet (194);
the inner circuit air annulus (190) extends longitudinally within the fuel nozzle (84) along the nozzle centerline (88), in the direction towards the distal end (90) of the fuel nozzle (84), to the inner circuit air outlet (194); and
the inner circuit air outlet (194) is located radially between the first circuit fuel outlet (156) and the second circuit fuel outlet (124, 142).

11. The apparatus of any preceding claim, wherein
the fuel nozzle (84) further includes an outer air circuit (98) and a wall (174), and the outer air circuit (98) includes a plurality of outer circuit air passages (176) and a plurality of outer circuit air outlets (184);
the plurality of outer circuit air passages (176) are arranged circumferentially about the nozzle centerline (88), and each of the plurality of outer circuit air passages (176) extends longitudinally through the wall (174) of the fuel nozzle (84), in the direction towards the distal end (90) of the fuel nozzle (84), to a respective one of the plurality of outer circuit air outlets (184); and
the plurality of outer circuit air outlets (184) are located radially outboard of the first circuit fuel outlet (156) and the second circuit fuel outlet (124, 142).

12. The apparatus of any preceding claim, further comprising:
a fuel delivery system (28) comprising a gaseous fuel source (74);
the fuel delivery system (28) configured to deliver gaseous fuel to the first gaseous fuel circuit (96) and the second gaseous fuel circuit (94, 95).

13. An apparatus for a powerplant (20), the apparatus comprising:
a fuel nozzle (84) extending longitudinally along a nozzle centerline (88) to a distal end (90), the fuel nozzle (84) including a first fuel circuit (96), a second fuel circuit (95) and a third fuel circuit (94);
the first fuel circuit (96) including a first circuit fuel passage (152) and a first circuit fuel outlet (156), the first circuit fuel passage (152) extending within the fuel nozzle (84), in a longitudinal direction towards the distal end (90) of the fuel nozzle (84), to the first circuit fuel outlet (156);
the second fuel circuit (95) radially outboard of the first fuel circuit (96), the second fuel circuit (95) including a second circuit fuel annulus (138) and a second circuit fuel outlet (142), and the second circuit fuel annulus (138) extending within the fuel nozzle (84), in the longitudinal direction and a radial inward direction towards the nozzle centerline (88), to the second circuit fuel outlet (142); and
the third fuel circuit (94) radially outboard of the second fuel circuit (95), the third fuel circuit (94) including a third circuit fuel annulus (120) and a third circuit fuel outlet (124), and the third circuit fuel annulus (120) extending within the fuel nozzle (84), in the longitudinal direction and the radial inward direction, to the third circuit fuel outlet (124); and
a fuel delivery system (28) comprising a gaseous fuel source (74), the fuel delivery system (28) configured to deliver gaseous fuel to at least one of the first fuel circuit (96), the second fuel circuit (95) or the third fuel circuit (94).

14. The apparatus of claim 13, wherein:
the fuel nozzle (84) further comprises a fuel swirler (154) within the first circuit fuel passage (152); and/or
the fuel nozzle (84) further includes a wall (174), a first air circuit (100) and a second air circuit (98), the first air circuit (100) includes a first circuit air annulus (190) and a first circuit air outlet (194), the first circuit air annulus (190) is radially outboard of the first fuel circuit (96) and radially inboard of the second fuel circuit (95), and the first circuit air annulus (190) extends within the fuel nozzle (84), in the longitudinal direction and the radial inward direction, to the first circuit air outlet (194), and the second air circuit (98) includes a plurality of second circuit air passages (176) and a plurality of second circuit air outlets (184), the plurality of second circuit air passages (176) are radially outboard of the third fuel circuit (94), and each of the plurality of second circuit air passages (176) extends through the wall (174) of the fuel nozzle (84), in the longitudinal direction and the radial inward direction, to a respective one of the plurality of second circuit air outlets (184).

15. An apparatus for a powerplant (20), comprising:
a fuel nozzle (84) extending longitudinally along a nozzle centerline (88) to a distal end (90), the fuel nozzle (84) including a first fuel circuit (96), a second fuel circuit (95) and a third fuel circuit (94);
the first fuel circuit (96) including a first circuit fuel passage (152) and a first circuit fuel outlet (156), the first circuit fuel passage (152) extending within the fuel nozzle (84), in a longitudinal direction towards the distal end (90) of the fuel nozzle (84), to the first circuit fuel outlet (156);
the second fuel circuit (95) radially outboard of the first fuel circuit (96), the second fuel circuit (95) including a plurality of second fuel circuit passages (136) and a plurality of second fuel circuit outlets (142) arranged circumferentially around the nozzle centerline (88), each of the plurality of second fuel circuit passages (136) extending within the fuel nozzle (84), in the longitudinal direction, to a respective one of the plurality of second fuel circuit outlets (142); and
the third fuel circuit (94) radially outboard of the second fuel circuit (95), the third fuel circuit (94) including a third circuit fuel annulus (120) and a third circuit fuel outlet (124), and the third circuit fuel annulus (120) extending within the fuel nozzle (84), in the longitudinal direction and a radial inward direction, to the third circuit fuel outlet (124); and
a fuel delivery system (28) comprising a gaseous fuel source (74), the fuel delivery system (28) configured to deliver gaseous fuel to at least one of the first fuel circuit (96), the second fuel circuit (95) or the third fuel circuit (94).
